# EUROPÄISCHE PATENTANMELDUNG

(11) **EP 0 819 517 A2**
(43) Veröffentlichungstag der Anmeldung: **21.01.1998**
(21) Anmeldenummer: 97109260.6
(22) Anmeldetag: 07.06.1997
(51) Int. Cl.: B32B 1/08, B32B 3/04

(54) **Beschichteter Gewebeschlauch und Verfahren zu seiner Herstellung**

(30) Priorität: 17.07.1996 DE 19628859; 02.09.1996 DE 19635562
(71) Anmelder: Windmöller & Hölscher, D-49525 Lengerich (DE)
(72) Erfinder: Bosse, Frank, 49545 Tecklenburg (DE)

(57) **Zusammenfassung**

Die Erfindung betrifft einen beschichteter Gewebeschlauch. Erfindungsgemäß werden die während seiner Herstellung entstehenden seitlichen Beschichtungsüberstände umgeschlagen und mit einer der äußeren Seitenflächen des beschichteten Gewebeschlauches fest verbunden.

## Beschreibung

Die Erfindung betrifft einen beschichteten Gewebeschlauch, und ein Verfahren zu seiner Herstellung.

Es sind bereits beschichtete Gewebeschläuche bekannt, die beispielsweise aus auf einem Rundwebstuhl gewebten Bändchengewebeschläuchen bestehen. Zur Herstellung von Säcken oder flexiblen Containern werden die Bändchengewebeschläuche in der Regel flachgelegt und anschließend durch eine Beschichtungsanlage geführt, um das für sich noch durchlässige Bändchengewebe mit einer undurchlässigen Beschichtung, d.h. in der Regel einer Kunststoffbeschichtung, zu versehen. Bei dieser Beschichtung vom Rundgewebe entstehen Beschichtungsüberstände, sogenannte Fahnen. Nach dem Stand der Technik werden diese Beschichtungsüberstände besäumt. Nach Besäumung bilden sie einen Rand von minimal ca. 5 bis maximal 10 oder 15 mm. Anschließend werden die Bändchengewebeschläuche in einer gewünschten Länge abgeschnitten.

In der Praxis hat sich gezeigt, daß diese Beschichtungsüberstände an der äußeren Seitenkante des beschichteten Gewebeschlauches eine harte Schneidkante bilden können, bei der Verletzungsgefahr besteht. Andererseits können diese Beschichtungsüberstände sehr leicht ein- oder abreißen. Hierdurch kann auch ein Ansatz zum Abschälen der aufgebrachten Beschichtung von dem Bändchengewebeschlauch gebildet sein. Hierdurch werden die Gewebeschläuche und eventuell daraus hergestellte Säcke undicht.

Andererseits wird das beschichtete Gewebe im Zusammenhang mit der Containerfertigung häufig gekrempelt, d.h. so in sich umgekehrt, daß die Beschichtung im Anwendungsfall nach innen liegt. Auch hier bilden die überstehenden Beschichtungsüberstände ein störendes Element, da sie beispielsweise durch das Füllgut abgerissen werden können, so daß der aus dem beschichteten Gewebe hergestellte Container beschädigt, d.h. beispielsweise wasserdurchlässig, wird.

Aufgabe der Erfindung ist es daher, einen beschichteten Gewebeschlauch zu schaffen, bei dem überstehende scharf- und einrißgefährdete Beschichtungen vermieden sind.

Erfindungsgemäß wird diese Aufgabe dadurch gelöst, daß die während der Herstellung des beschichteten Gewebeschlauchs entstehenden seitlichen Beschichtungsüberstände umgeschlagen und mit einer der äußeren Seitenflächen des beschichteten Gewebeschlauchs fest verbunden wird. Hierdurch wird nicht nur ein beschichteter Gewebeschlauch geschaffen, der keine Überstände aufweist. Es wird vielmehr der eigens vorzusehende Beschneid- und Besäumungsschritt eingespart und es entstehen keine unnötigen Randstreifenabfälle während dieses Verfahrensschrittes, deren Weiterverarbeitung wiederum eigene Verfahrensschritte nach sich ziehen.

Vorteilhaft besteht der beschichtete Gewebeschlauch aus einem rundgewebten Bändchengewebe. Ein Verfahren zur Herstellung des erfindungsgemäßen beschichteten Gewebeschlauches umfaßt den Verfahrensschritt, daß die bei der Beschichtung des Gewebeschlauches entstehenden Beschichtungsüberstände umgeschlagen werden, bis sie auf der flächigen Gewebebeschichtung aufliegen und daß sie anschließend mit der flächigen Gewebebeschichtung verbunden werden. Das Umschlagen des Beschichtungsüberstandes erfolgt dabei vorteilhaft über eine Formschulter. Die Verbindung des Beschichtungsüberstandes mit der flächigen Gewebebeschichtung erfolgt vorteilhaft über ein Schweißverfahren, beispielsweise durch Einblasen von Heißluft oder durch Einführen eines Heißkeils. Alternativ dazu kann der Überstand auch auf die Gewebebeschichtung geklebt werden, beispielsweise durch ein Hotmelt oder einen Lösungsmittelkleber, das ebenfalls beispielsweise durch Heißluft oder durch einen Heißkeil aktiviert werden kann.

Weitere Einzelheiten und Vorteile ergeben sich aus dem in der Zeichnung dargestellten Ausführungsbeispiel. Es zeigen:
- Fig. 1:: einen beschichteten Gewebeschlauch im Querschnitt in einem Zwischenstadium der Fertigung,
- Fig. 2:: einen fertigen beschichteten Gewebeschlauch nach dem Stand der Technik entsprechend dem Ausschnitt A nach Fig. 1 und
- Fig. 3:: einen beschichteten Gewebeschlauch gemäß dem Ausschnitt A nach Fig. 1 entsprechend einer Ausführungsform der vorliegenden Erfindung.

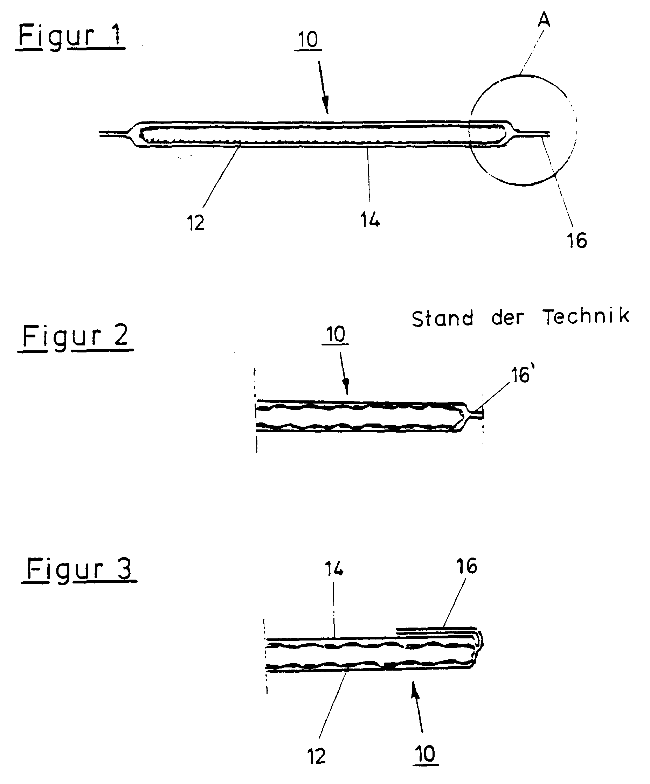

In Fig. 1 ist ein beschichteter Gewebeschlauch 10 dargestellt, der aus einem Bändchengewebe 12 und eine auf diese aufgebrachte Beschichtung 14 besteht. Der hier dargestellte beschichtete Gewebeschlauch 10 ist flachgelegt und in einem Zustand dargestellt, in welchem er aus der Beschichtungsmaschine herausgefahren wird. In diesem Zustand weist er einen Überstand 16 von ca. 50 bis 150 mm auf.

Nach dem Stand der Technik wurde dieser Überstand 16 in einem weiteren Verfahrensschritt abgeschnitten und der Restüberstand 16' wurde auf etwa 5 bis 15 mm besäumt. Dieser beschichtete Gewebeschlauch war immer noch einreißgefährdet und konnte zu Verletzungen führen.

In Fig. 3 ist nun der erfindungsgemäße beschichtete Gewebeschlauch dargestellt, bei dem der Überstand 16 umgelegt und auf die Beschichtung 14 aufgelegt und mit dieser verbunden ist. Im hier dargestellten Ausführungsbeispiel sind die beiden Schichten miteinander verschweißt worden.

## Patentansprüche

1. Beschichteter Gewebeschlauch,
**dadurch gekennzeichnet**,
daß die während seiner Herstellung entstehenden seitlichen Beschichtungsüberstände umgeschlagen und mit einer der äußeren Seitenflächen des beschichteten Gewebeschlauches fest verbunden sind.

2. Beschichteter Gewebeschlauch nach Anspruch 1, dadurch gekennzeichnet, daß er aus einem rundgewebten Bändchengewebe besteht.

3. Verfahren zur Herstellung eines beschichteten Gewebeschlauches nach Anspruch 1 oder 2, dadurch gekennzeichnet, daß die bei der Beschichtung des Gewebeschlauches entstehenden Beschichtungsüberstände umgeschlagen werden, bis sie auf der flächigen Gewebebeschichtung aufliegen und daß sie anschließend mit der flächigen Gewebebeschichtung verbunden werden.

4. Verfahren nach Anspruch 3, dadurch gekennzeichnet, daß die seitlichen Überstände jeweils über Formschultern umgeschlagen werden.

5. Verfahren nach Anspruch 3 oder 4, dadurch gekennzeichnet, daS die Überstände nach dem Umschlagen mit einem Schweißverfahren, beispielsweise durch eingeblasene Heißluft oder einen Heizkeil mit der flächigen Gewebebeschichtung verbunden werden.

6. Verfahren nach Anspruch 3 oder 4, dadurch gekennzeichnet, daß die Überstände nach dem Umschlagen durch Verkleben mit der flächigen Gewebebeschichtung verbunden werden.

7. Sack hergestellt aus einem beschichteten Gewebeschlauch nach Anspruch 1 oder 2, der vorzugsweise nach einem Verfahren gemäß einem der Ansprüche 3-6 hergestellt ist.
